# EUROPEAN PATENT SPECIFICATION

(11) **EP 0 562 760 B1**
(45) Date of publication and mention of the grant of the patent: **20.11.1996**
(21) Application number: 93302051.3
(22) Date of filing: 18.03.1993
(51) Int. Cl.: H04N 1/56

(54) **Apparatus for measuring the spectral response of a color imaging device**
Verfahren um die spektrale Antwort einer Farbbildaufnahmeeinrichtung zu messen
Appareil pour mesurer la réponse spectrale pour un capteur d'image couleur

(30) Priority: 25.03.1992 IL 101375
(43) Date of publication of application: 29.09.1993
(73) Proprietor: SCITEX CORPORATION LTD., Herzliya 46103 (IL)
(72) Inventor: Melman, Haim Zvi, Kfar Saba 44421 (IL)
(74) Representative: Hillier, Peter

(56) References cited:
- EP-A- 0 383 308
- WO-A-90/05286
- US-A- 2 422 778

## Description

The present invention relates to imaging apparatus generally and more particularly to color separation scanners.

Color separation scanners are employed for converting a colored hard copy image, such as a print or transparency into one or more hard copy images, such as color separation films or to a digital file. Normally the operation of a color separation scanner involves transformation of the color information inherent in the color hard copy image from one color space to at least one other color space.

While the color transformation is a function of the particular application for which the scanning takes place, it should be such that the result thereof is independent of the particular scanner employed.

Conventionally, as in the Scitex Smart Scanner, produced by Scitex Corporation Ltd. of Herzlia, Israel, color transformations are carried out using a look-up table (LUT) in the scanner, whose contents are a function of the nature of the color separation performed by the scanner. It is appreciated, however, that a fixed LUT cannot be entirely suitable for different scanners, even different scanners of the same model, due to differences therebetween within manufacturing tolerances, which produce different spectral responses.

It has been proposed in U.S. Patent US-A-5,296,935 published on March, 22, 1994 of the present assignee to provide a personalized LUT for each scanner, based on predetermined input/output requirements. Such a LUT can be employed without any reference to the spectral response of such a scanner, but does require the use of input color target.

Efforts are currently underway in the graphic arts industry to achieve what is termed "device independent color". These efforts currently center on the use of an input target, such as a transparency, divided into a plurality of color patches. The target is scanned by a particular scanner to provide the R,G,B color separation values assigned by the scanner for each one of the patches. Measurement of the patches with a calorimeter provides the values of the patches in a specific color space such as CIEL∗a∗b∗ color space. On the basis of the R,G,B values and the L∗a∗b∗ values a color transformation is constructed and implemented in the scanner, using methods similar to those described in the aforesaid U.S. Patent.

A significant disadvantage of the use of input targets or reference devices is that they change their color values over time and thus must be replaced or remeasured, at significant cost.

U.S. Patent US-A-4,898,467 describes the measurement of spectral response of a scanner by placing a diffraction grating between a lens and a multiple pixel image sensor. The apparatus described in U.S. Patent US-A-4,898,467 has a number of disadvantages, which may be summarized as follows:
1. It is not suitable for use with a single pixel image sensor which would read only one wavelength region of the spectrum.
2. When the lens is employed for reduction, the distance between the lens and the sensor may be too small to practically introduce a diffraction grating therebetween.

The present invention seeks to provide apparatus for measuring the spectral response of color imaging devices such as color separation scanners.

There is provided in accordance with the present invention apparatus for measuring the spectral response of a color imaging device which includes light source means, a light sensor, optical imaging apparatus defining an object plane, an image plane and an optical axis, the apparatus for measuring including:
a diffraction grating disposed intermediate the object plane and the image plane;
optical aperture defining means located in the object plane; and
means for displacing at least one of the light source means, the light sensor, and the optical aperture in a direction generally perpendicular to the optical axis in order to provide a sweep of the light spectrum at said light sensor.

The present invention will be understood and appreciated more fully from the following detailed description, taken in conjunction with the drawings in which:

Figs. 1A and 1B are respective simplified pictorial and diagrammatic illustrations of a typical drum type color separation scanner.

Figs. 2A and 2B are simplified diagrammatic illustrations of two operative orientations of the scanner of Figs. 1A and 1B, with the addition of apparatus for measuring the spectral response of the scanner, wherein the aperture is displaced relative to the scanner and the optical axis;

Figs. 3A and 3B are simplified diagrammatic illustrations of two operative orientations of the apparatus of Figs. 2A and 2B wherein the light source is displaced in a direction generally perpendicular to the optical axis;

Figs. 4A and 4B are simplified diagrammatic illustrations of two operative orientations of the apparatus of Figs. 2A and 2B wherein the light source is tilted and displaced relative to the optical axis;

Figs. 5A and 5B are simplified diagrammatic illustrations of two operative orientations of the apparatus of Figs. 2A and 2B wherein the light source is displaced relative to a focusing lens associated therewith;

Figs. 6A and 6B are simplified diagrammatic illustrations of two operative orientations of the apparatus of Figs. 2A and 2B wherein the light sensor assembly is displaced relative to the aperture in a direction generally perpendicular to the optical axis.

Fig. 7A is a simplified pictorial illustration of another embodiment of a typical drum type color separation scanner, constructed and operative in accordance with a preferred embodiment of the present invention, and Fig. 7B is a diagrammatic illustration of the scanner of Fig. 7A with associated apparatus for measuring its spectral response;

Figs. 8A and 8B are simplified diagrammatic illustrations of two additional operative orientations of the typical drum type color separation scanner and associated apparatus for measuring its spectral response illustrated in Fig. 7B.

Fig. 9A is a simplified pictorial illustration of a typical flat bed type color separation scanner, constructed and operative in accordance with a further preferred embodiment of the present invention, and Fig. 9B is a diagrammatic illustration of the separation scanner of Fig. 9A with associated apparatus for measuring its spectral response;

Figs. 10A and 10B are simplified diagrammatic illustrations of two operative orientations of the typical flat bed type color separation scanner of Figs. 9A - 9B wherein the optical aperture is displaced generally perpendicular to the optical axis and the light sensor employs a single sensor element for measuring spectral sensitivity;

Figs. 11A and 11B are simplified diagrammatic illustrations of a flat bed type scanner with a two dimensional area light source and associated apparatus for measuring its spectral response, constructed and operative in accordance with a further preferred embodiment of the present invention;

Figs. 12A and 12B are respective simplified pictorial and diagrammatic illustrations of a rotatable flat bed type color separation scanner and associated apparatus for measuring its spectral response, constructed and operative in accordance with another preferred embodiment of the present invention; and

Fig. 13 is a pictorial illustration of a light source located within an optical cavity, useful in an embodiment of the present invention.

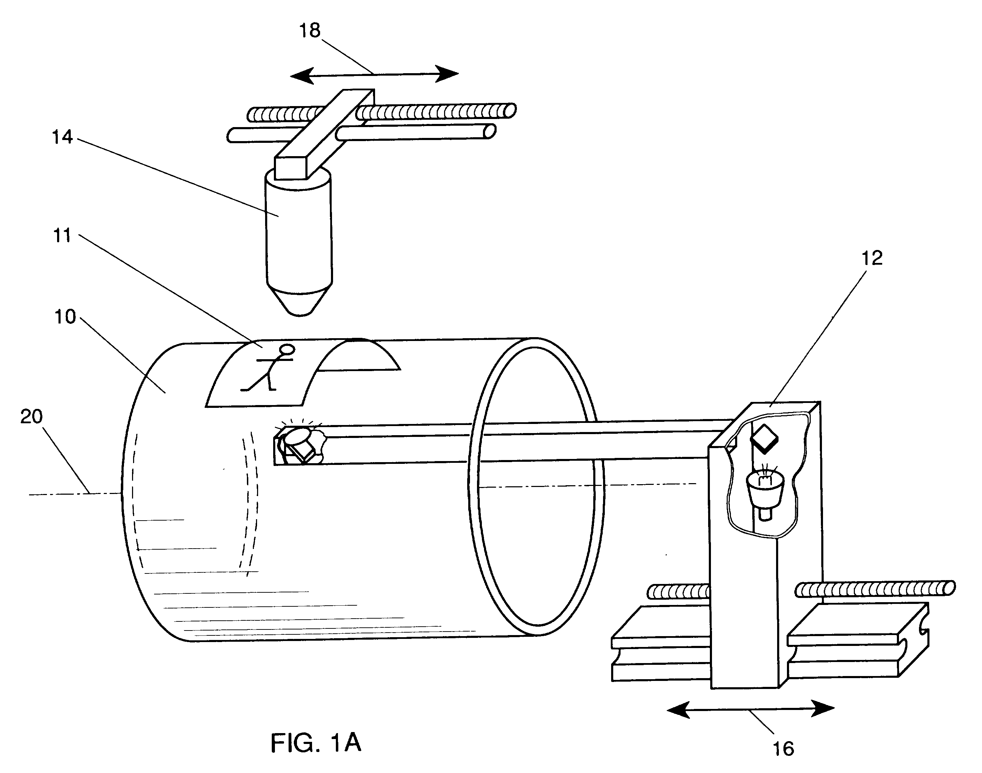

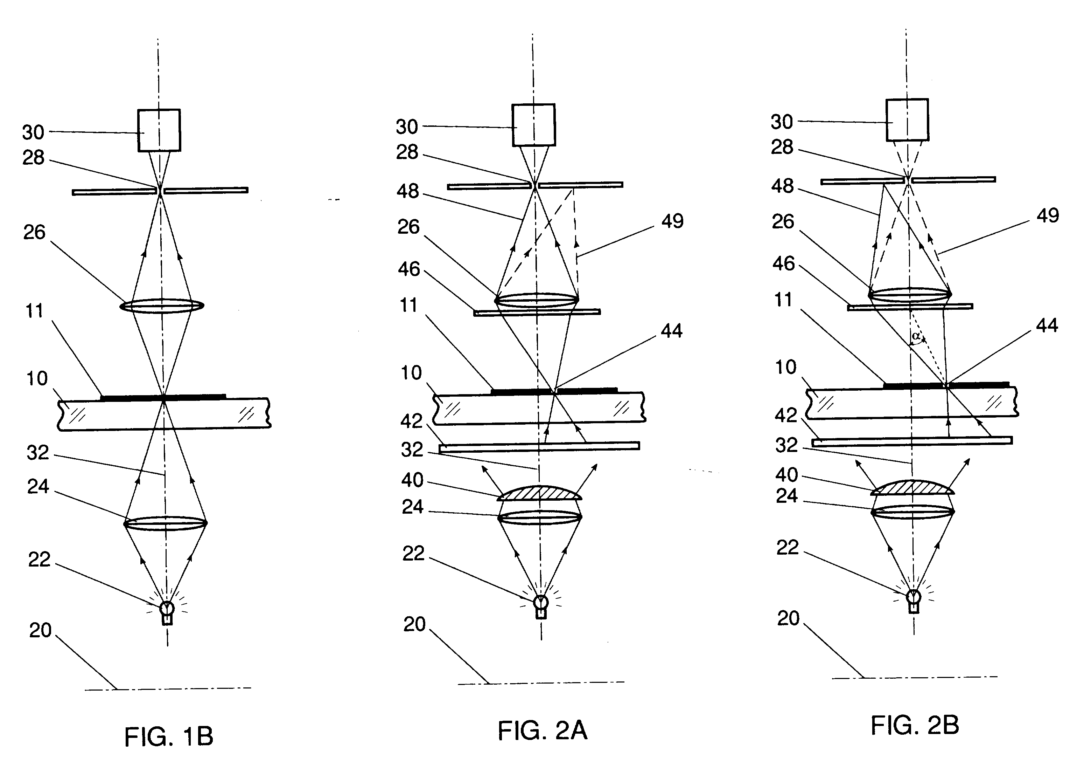

Reference is now made to Figs. 1A and 1B, which illustrate a typical drum scanner, such as DC399 available from Lynotype-Hell, Germany, which includes a transparent drum 10 onto which an object, such as a transparency 11, is placed for scanning thereof. A point light source assembly 12 and a light sensor assembly 14 are arranged on screw drives for displacement along respective axes 16 and 18, which are parallel to the axis of symmetry 20 of the drum 10.

As seen particularly in Fig. 1B, the point light source of assembly 12, which is represented by a light source 22, projects light via a lens 24 onto a surface of drum 10, illuminating part of transparency 11. The light passing through the transparency is collected by a lens 26, which images the transparency onto the plane of an aperture 28. Aperture 28 is operative to limit the field of view of a light sensor 30, such as a photomultiplier.

An optical axis 32 is defined extending through the center of light sensor 30 and the center of lens 26. Rotation of drum 10 about axis 20 and relative axial displacement between the drum 10 and the rest of the elements described above along axis 20, produces scanning action of the scanner.

Reference is now made to Figs. 2A and 2B, which illustrate an embodiment of the present invention in which a cylindrical lens 40 is disposed between lens 24 and drum 10 in order to scatter the light from light source 22 in a plane parallel to the axis of symmetry 20 of the drum 10. Alternatively any other suitable type of lens 40 may be employed. As a further alternative lens 24 may be removed.

Further in accordance with a preferred embodiment of the present invention, a diffuser 42 is provided between drum 10 and lens 40. Where lenses 40 and 24 are not present, the diffuser 42 is located between the light source 22 and the drum 10. Diffuser 42, which may be a piece of glass having a ground surface, is operative to diffuse light directed onto drum 10. An optical aperture 44, preferably in the form of a slit extending perpendicular to the optical axis 32 and to the axis of symmetry 20, is placed on the surface of drum 10 in a location where a transparency normally is placed for scanning thereof.

In accordance with a preferred embodiment of the present invention a diffraction grating 46 is placed in front of lens 26, i.e. between aperture 44 and lens 26, such that its ruling lines lie parallel to the slit of aperture 44. According to an alternative embodiment of the invention, diffraction grating 46 may be placed behind lens 26, i.e. between lens 26 and the aperture 28.

The presence of diffraction grating 46 causes diffraction of the light passing through aperture 44, producing a multichromatic light spectrum to be projected onto the image plane of lens 26. Reference numeral 48 indicates a ray bundle of the blue end of the first order diffraction, while reference numeral 49 indicates a ray bundle of the red end of the first order diffraction. The remainder of the visible spectrum is linearly distributed between the light bundles indicated by reference numerals 48 and 49 as a function of wavelength.

In the operational orientation shown in Fig. 2A, wherein the optical axis 32 is not aligned with aperture 44, the blue end of the spectrum is focused onto aperture 28. In this operational orientation, light sensor 30 is illuminated by the blue end of the spectrum and the signal provided by sensor 30 is proportional to the spectral sensitivity of the scanner for the corresponding wavelength.

Gradual displacement of the aperture 44 relative to the optical axis 32 in a direction parallel to the axis of symmetry 20 towards the operational orientation shown in Fig. 2B, causes sequentially longer -wavelength light to impinge on sensor 30 via aperture 28, thus providing outputs from sensor 30 which indicate the scanner sensitivity to wavelengths all across the visible spectrum. Fig. 2B illustrates the extreme orientation of the optical axis 32 relative to aperture 44, at which the red end of the spectrum impinges on sensor 30.

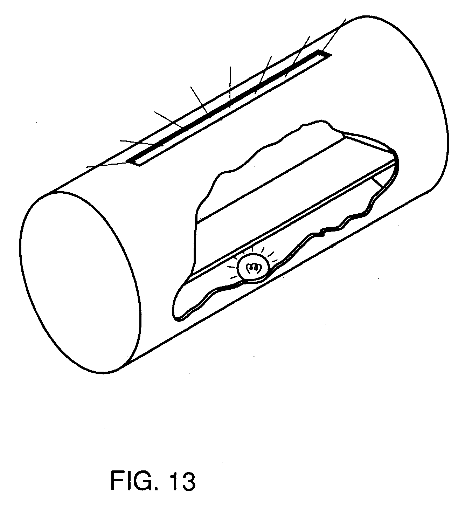

One limitations inherent in the system of Figs. 1A - 2B is the significant uniformity of the light source required over the diffuser surface. Light diffusion may alternatively be provided by the use of an integrating cavity, such as shown in Fig. 13. Suitable light diffusers are commercially available for example from Labsphere, P.O.B. 70, North Sutton, NH, U.S.A..

In order to achieve enhanced accuracy, a correction to the measured intensity output of sensor 30 may be introduced as a function of the position of the aperture 44 relative to the optical axis 32. Accordingly, division of the output intensity sensed by sensor 30 by cos² (alpha), where alpha is the angle between the optical axis 32 and a line extending from the aperture 44 to the optical axis at diffraction grating 46, can provide a suitable correction.

Alternative solutions to the limitations inherent in the use of spot illumination may include the use of a replacement light source which has a relatively wide area, such as an aperture fluorescent lamp, such as employed in the SmartScanner manufactured and sold by Scitex Corporation Ltd. of Herzlia, Israel. Electroluminescent lamps and any other suitable light source providing area illumination may alternatively be employed.

When a replacement light source is employed for the measurement step, it is essential that its spectral distribution be known. In such a case, the measured spectral response of the scanner must be divided by the spectral distribution of the replacement light source and multiplied by the spectral distribution of the spot light source which is part of the scanner, in order to provide the true spectral response of the scanner.

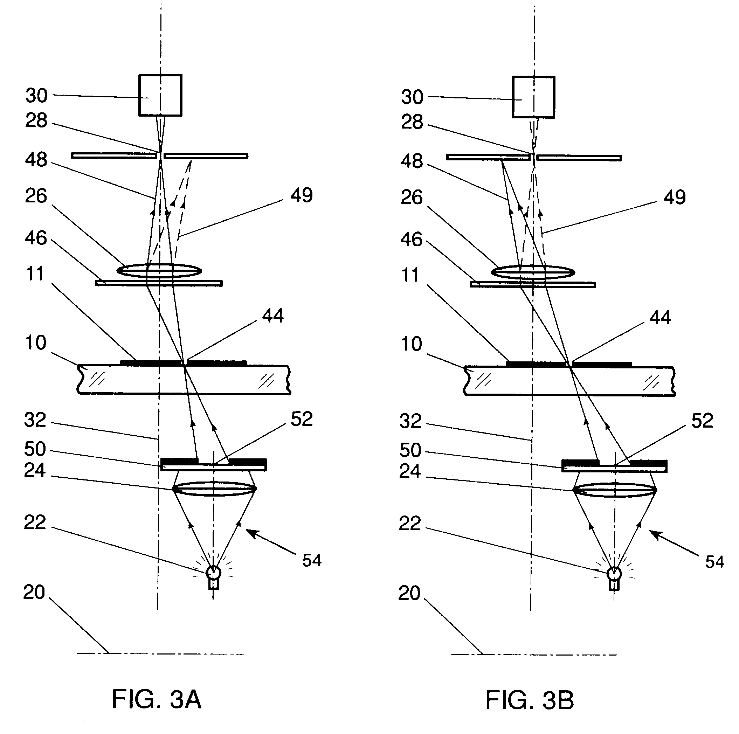

Reference is now made to Figs. 3A and 3B. The optical elements are the same as in the embodiment of Figs. 2A and 2B, and are identified by identical reference numerals, except that lens 40 and diffuser 42 are replaced by a diffuser 50 having an aperture 52.

More importantly, in the embodiment of Figs. 3A and 3B, the light source assembly labeled 54 and including light source 22, lens 24, diffuser 50 and aperture 52 is displaced relative to the optical axis and to the aperture 44 in a direction generally parallel to the axis of symmetry 20 and the aperture 44 is displaced relative to the optical axis in the same direction.

Fig. 3A illustrates the extreme orientation wherein the blue end of the spectrum is sensed by light sensor 30, while Fig. 3B illustrates the opposite extreme orientation wherein the red end of the spectrum is sensed by light sensor 30. The above mentioned cos² (alpha) corrections are also applicable in this embodiment.

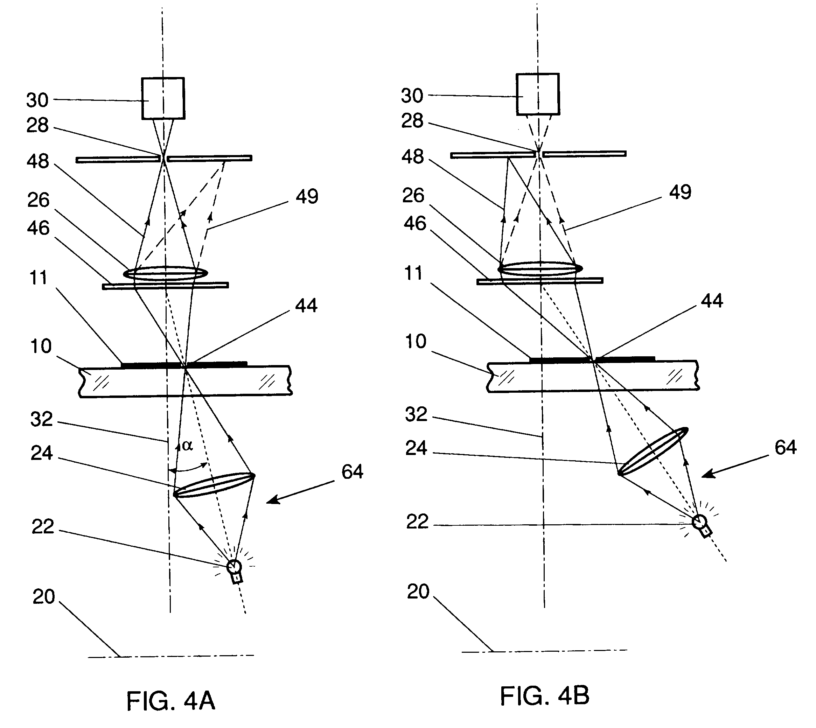

Reference is now made to Figs. 4A and 4B. The optical elements are the same as in the embodiment of Figs. 3A and 3B, and are identified by identical reference numerals, except that diffuser 50 and aperture 52 are eliminated.

Similarly to the embodiment of Figs. 3A and 3B, the light source assembly labeled 64 and including light source 22 and lens 24, is displaced relative to the optical axis and to the aperture 44 in a direction generally parallel to the axis of symmetry 20 and the aperture 44 is displaced relative to the optical axis in the same direction.

As distinct from the embodiment of Figs. 3A and 3B, the tilt of the light source assembly 64 is changed with its displacement from the aperture, such that it is always directed towards the center of the diffusion grating 46.

Fig. 4A illustrates the extreme orientation wherein the blue end of the spectrum is sensed by light sensor 30, while Fig. 4B illustrates the opposite extreme orientation wherein the red end of the spectrum is sensed by light sensor 30. The above mentioned cos² (alpha) corrections may become cos (alpha) corrections or may be eliminated if the tilting angle is small enough.

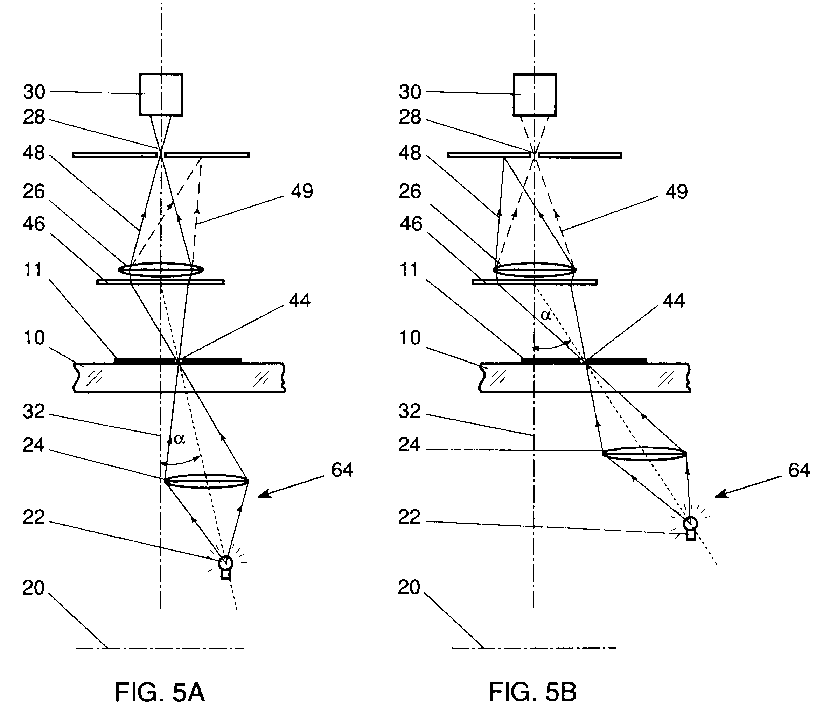

Reference is now made to Figs. 5A and 5B. The optical elements are the same as in the embodiment of Figs. 4A and 4B.

Similarly to the embodiment of Figs. 4A and 4B, the light source assembly labeled 64 is displaced relative to the optical axis and to the aperture 44 in a direction generally parallel to the axis of symmetry 20 and the aperture 44 is displaced relative to the optical axis in the same direction.

As distinct from the embodiment of Figs. 4A and 4B, the light source assembly 64 is not tilted, but instead lamp 22 is displaced relative to lens 24 in a direction generally parallel to the axis of symmetry 20. As can be seen from Figs. 5A and 5B, the more that lens 24 is displaced from aperture 44, the more light source 22 is displaced in the same direction from lens 24.

Fig. 5A illustrates the extreme orientation wherein the blue end of the spectrum is sensed by light sensor 30, while Fig. 5B illustrates the opposite extreme orientation wherein the red end of the spectrum is sensed by light sensor 30. The above mentioned cos² (alpha) corrections are also applicable in this embodiment.

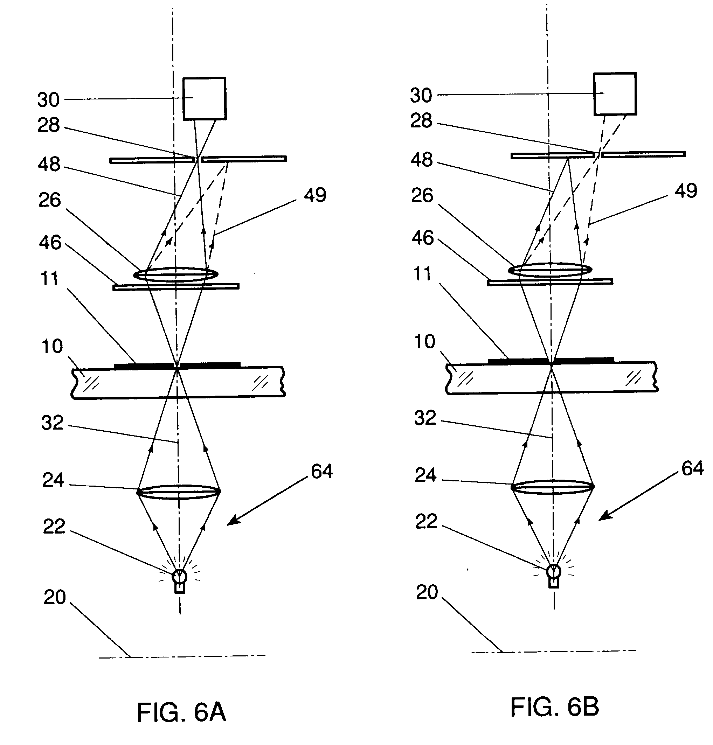

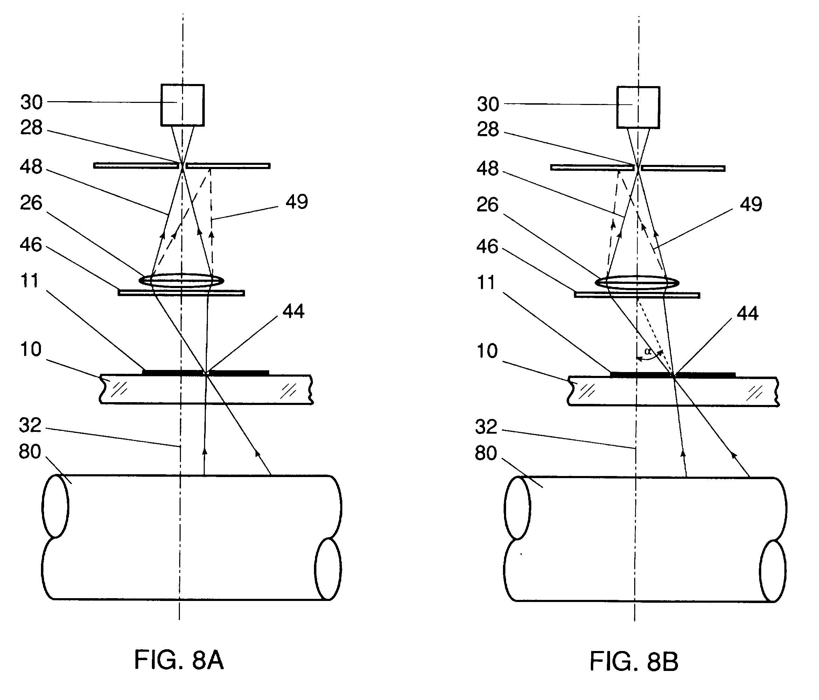

Reference is now made to Figs. 6A and 6B. The optical elements are the same as in the embodiment of Figs. 5A and 5B, and are identified by identical reference numerals.

In contrast with the embodiment of Figs. 5A and 5B, the light source assembly 64 including light source 22 and lens 24, is not displaced. Instead aperture 28 and light sensor 30 are displaced relative to aperture 44 and relative to each other, in a direction generally parallel to the axis of symmetry 20, while the light source assembly 64 remains fixed relative to aperture 44.

Fig. 6A illustrates the extreme orientation wherein the blue end of the spectrum is sensed by light sensor 30, while Fig. 6B illustrates the opposite extreme orientation wherein the red end of the spectrum is sensed by light sensor 30. The above mentioned cos² (alpha) corrections are also desirable in this embodiment although they are negligible due to the small angles.

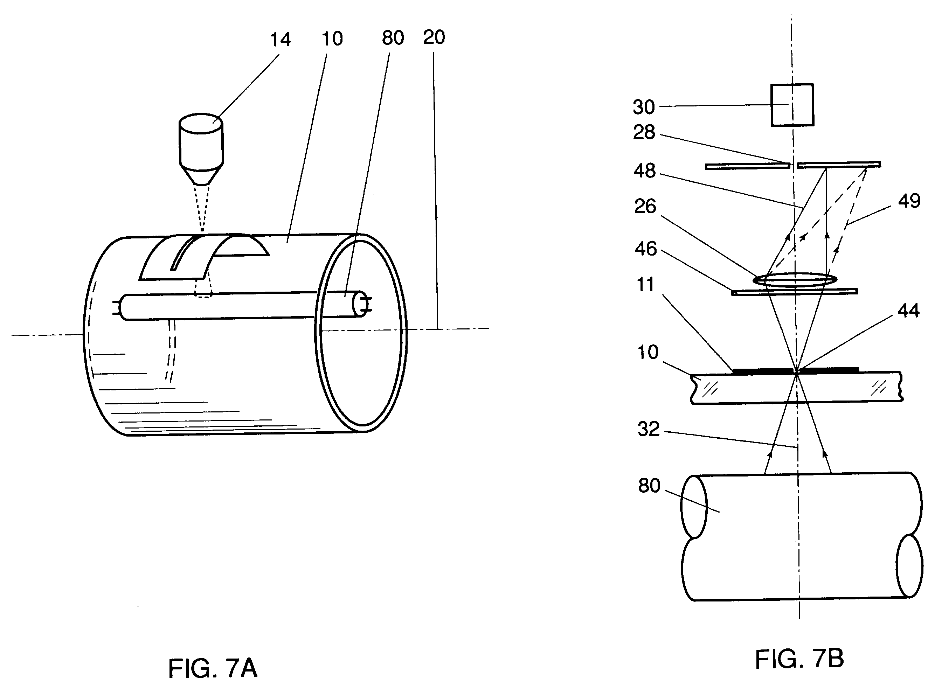

Reference is now made to Figs. 7A and 7B. Fig. 7A illustrates a drum scanner which is generally identical to the drum scanner of Figs. 1A and 1B, but employs an elongate light source 80, such as an aperture fluorescent lamp rather than a point light source 22 and lens 24. Fig. 7B illustrates a cross sectional view of the drum scanner of Fig. 7A wherein aperture 44 and diffraction grating 46 are added similarly to the addition thereof in Fig. 2A. The remaining optical elements may be essentially the same as in the embodiment of Figs. 1A and 1B and are identified by identical reference numerals. The elongate light source remains static with respect to the position of drum 10 along axis 20. In this embodiment replacement light sources are not required for measurement.

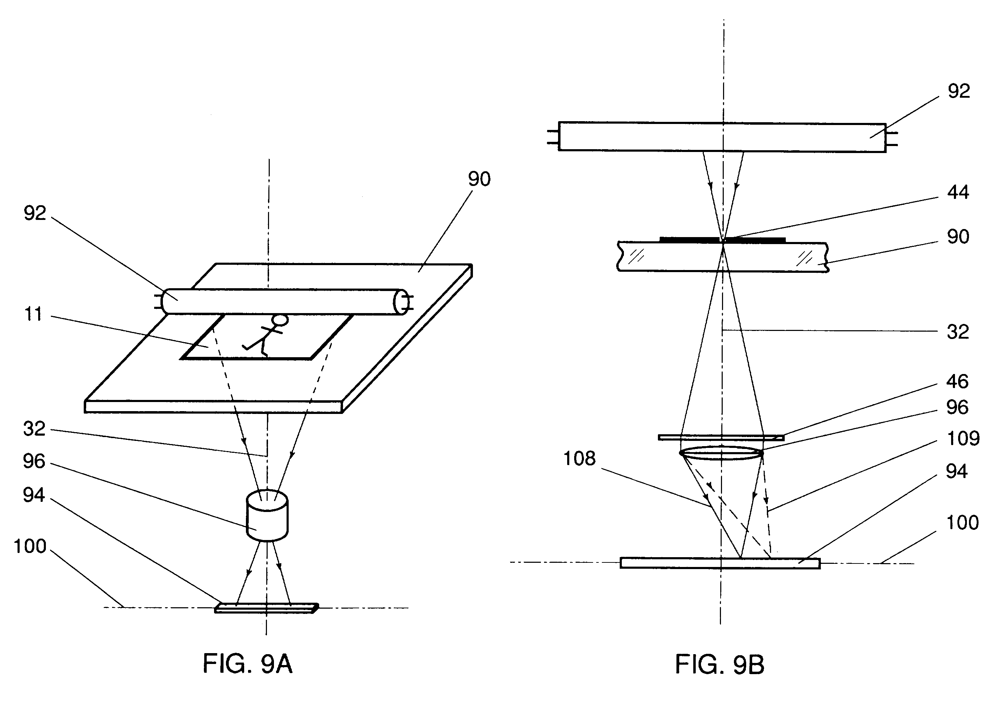

Reference is now made to Figs. 8A and 8B which illustrate additional operational orientations of the embodiment of Figs. 7A and 7B.

Similarly to the embodiment of Figs. 2A and 2B, the optical aperture 44 is displaced generally parallel to the axis of symmetry 20 relative to the entire optical assembly including elements 26, 28, 30, and 46.

Fig. 8A illustrates the extreme orientation wherein the blue end of the spectrum is sensed by light sensor 30, while Fig. 8B illustrates the opposite extreme orientation wherein the red end of the spectrum is sensed by light sensor 30. The above mentioned cos² (alpha) corrections may be used for increased accuracy. It is not necessary to know the spectral distribution of the light source 80.

Reference is now made to Figs. 9A - 9B. Fig. 9A illustrates a typical flat bed scanner, such as a Smart Scanner, commercially available from Scitex Corporation Ltd. of Herzlia, Israel, which includes a transparent flat support 90 onto which an object, such as a transparency 91, is placed for scanning thereof.

The elongate light source 92 projects light onto support 90, illuminating part of transparency 91. The light passing through the transparency is collected by a lens 96, which images the transparency onto the plane of multi-element light sensor 94, such as a CCD, which is arranged to define a first scanning direction parallel to a scanning axis 100.

An optical axis 32 is defined extending between the light source 92 and the center of light sensor 94 via the center of lens 96. Relative displacement between support 90 and the rest of the elements described above along directions perpendicular to the optical axis 32 and the scanning axis 100 produces scanning action of the scanner in a second direction.

Fig. 9B illustrates the same typical flat bed scanner as the scanner illustrated in Fig. 9A with the addition of an associated spectral sensitivity measuring apparatus.

Transparency 91 of Fig. 9A is replaced in Fig. 9B by an optical aperture 44, preferably a slit, perpendicular to the scanning direction of axis 100. Diffraction grating 46 is disposed between aperture 44 and imaging lens 96. This position is particularly useful when utilizing a reduction ratio imaging conjugation, in which case there may not be enough space between imaging lens 96 and image plane, where sensor 94 is located, for insertion of a diffraction grating.

Light ray bundle 108 represents the blue end of the spectral range of the scanner, while light ray bundle 109 represents the red end of the spectral range of the scanner. All other wavelengths span linearly between ray bundles 108 and 109, as a function of wavelength. The output signal of each pixel in this range is therefore the spectral sensitivity of the scanner in the wavelength of the particular pixel.

The vignetting of lens 96 may be compensated by dividing the output signals of the pixels by the vignetting function. Alternatively, a relatively closed iris diaphragm located inside lens 96 may eliminate the need to consider vignetting.

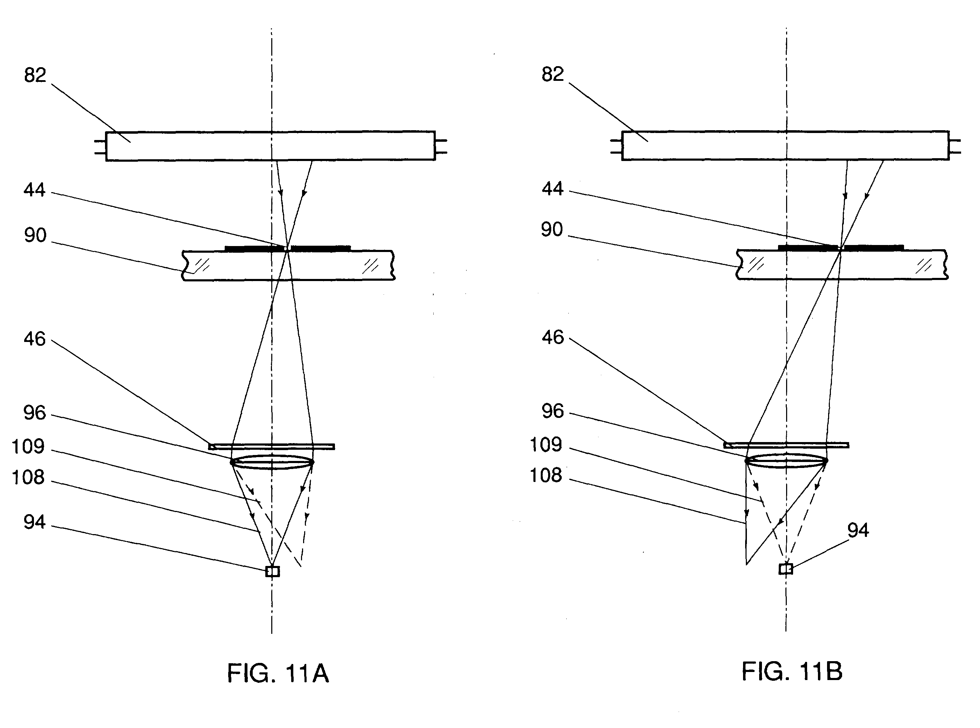

It is also appreciated that if the light source, such as the two dimensional light box 82 of Figs. 11A and 11B, is wide enough, slit aperture 44 and the diffraction grating lines may be placed in a direction parallel to axis 100, i.e. perpendicular to the page in Figs. 11A and 11B. By moving support 90 in a scanning direction perpendicular to axis 100, the various light ray bundles of the various wavelengths will sweep over sensor 94.

In the particular case described above, a large part of the sensor, or alternatively the whole sensor, may be used to read the sensitivity for each wavelength band. Calculating the average of all readings from the pixels of the sensor in each particular position of support 90 will provide an accurate sensitivity measurement of the associated wavelength.

It will be obvious to those skilled in the art that the above methods are applicable to two dimensional scanners or cameras, for which the orientation of aperture 44 and the parallel diffraction grating 46 is not critical. Accessing data is simpler, however, if the slit is either parallel to the sensor lines or to the sensor columns. Data will be extracted from the image in a direction perpendicular to the slit, while data averaging will be performed in a direction parallel to the direction of the slit.

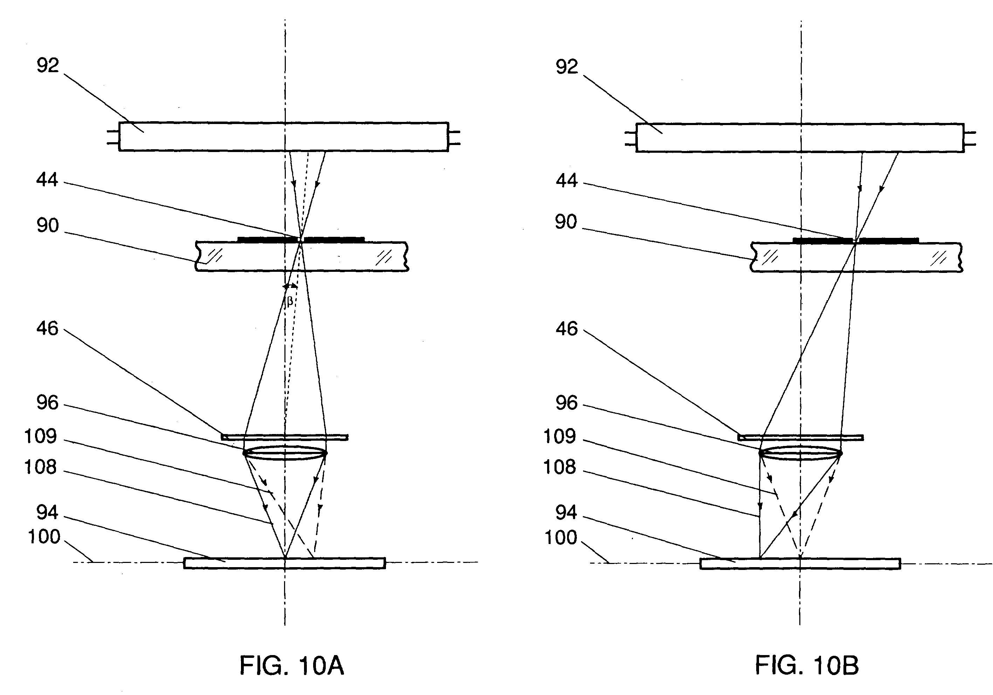

Reference is now made to Figs. 10A and 10B. In the operational orientation shown in Fig. 10A, the blue end of the spectrum is focused onto the center of sensor 94. Gradual displacement of aperture 44 relative to the optical axis 32 in a direction parallel to axis 100 towards the operational orientation shown in Fig. 10B, causes sequentially longer wavelength light to impinge on the center of sensor 94, thus providing outputs from a single pixel of sensor 94 which indicate the scanner sensitivity to wavelengths all across the visible spectrum. Fig. 10B illustrates the extreme orientation of aperture 44 relative to optical axis 100, at which the red end of the spectrum impinges on the center of sensor 94. Alternatively, a single pixel which is not in the center of sensor 94 may be used in accordance with the same method.

It is to be noted, however, that when the diffraction grating 46 is located between optical aperture 44 and lens 96, vignetting effects will be reduced by using the pixel located on the optical axis.

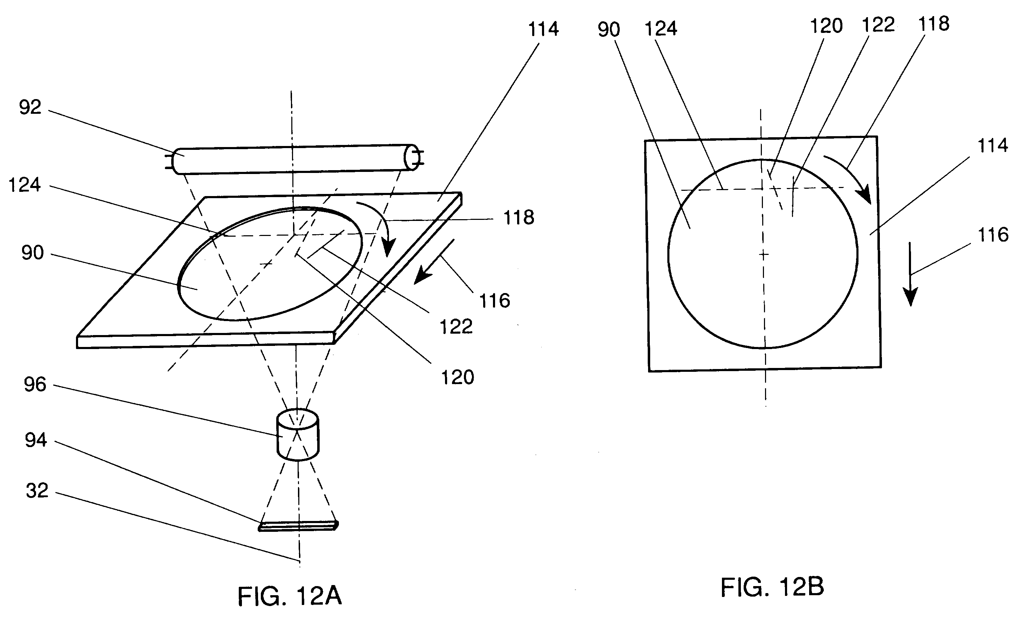

In the embodiment of Figs. 10A and 10B, the scanner's inherent linear displacement capability along axis 100 is utilized to provide the required displacement of the aperture relative to the optical axis. Where it is sought to measure the spectral response of flat bed scanners having no linear displacement capability in the required direction, a rotational displacement capability may be employed, as illustrated in the embodiment of Figs. 12A and 12B.

Considering now the embodiment of Figs. 12A and 12B, it is seen that the optical structure of this embodiment is similar to that of the embodiment of Figs. 10A and 10B. Rotational displacement of the aperture in the direction indicated by arrow 118 between its location indicated by reference numeral 120 to a location indicated by reference numeral 122 produces scanning of the light spectrum over the center of the linear CCD array 94.

Line 124 is imaged on sensor 94 at a specific location of carriage 114 in direction 116. The location and length of the aperture are designed to cross line 124 throughout the rotation from position 120 to position 122. It is also useful to design the angle of the aperture such that at the center point between 120 and 122, it will be perpendicular to line 124.

It will be appreciated by persons skilled in the art that the present invention is not limited by what has been particularly shown and described hereinabove. Rather the scope of the present invention is defined only by the claims which follow:

## Claims

1. Apparatus for measuring the spectral response of a color imaging device which includes light source means, a light sensor, optical imaging apparatus defining an object plane, an image plane and an optical axis (32), the apparatus for measuring including:
a diffraction grating (46) disposed intermediate the object plane and the image plane;
optical aperture defining means (44) located in the object plane; and
means for displacing at least one of the light source means (22), the light sensor (30), and the optical aperture (44) in a direction generally perpendicular to the optical axis (32) in order to provide a sweep of the light spectrum at said light sensor (30).

2. Apparatus according to claim 1 and wherein said diffraction grating (46) is disposed intermediate the optical imaging apparatus and the object plane.

3. Apparatus according to claim 1 or claim 2 and wherein said light source means include spot illumination means (22) and optical means for expansion of spot illumination.

4. Apparatus according to claim 3 and wherein said optical means for expansion include a cylindrical lens (40) and a diffuser (42) associated therewith.

5. Apparatus according to claim 3 and wherein said optical means for expansion include a diffuser (42) associated with said spot illumination means (22).

6. Apparatus according to claim 3 and wherein said means for expansion comprise an integrating cavity.

7. Apparatus according to claim 1 or claim 2 and wherein said light source means comprise spot illumination means and area illumination means, alternatively, both having know spectral distribution.

8. Apparatus according to claim 1 and wherein said means for displacing is operative for displacing at least two of the light source means (22), the diffraction grating (46), the light sensor (30) and the optical aperture (44).

9. Apparatus according to any of claims 1 to 8 and wherein said light source means comprises a linear light source (80).

10. Apparatus according to any of claims 1 to 8 and wherein said light source means comprises an area light source.

11. Apparatus according to claim 1 and also comprising means for correcting for vignetting.

12. Apparatus according to any of claims 1 to 11 and wherein said light source (30) is a single pixel sensor.

13. Apparatus according to any of claims 1 to 12 and wherein said aperture defining means is fixed and said relative displacement is relative to a fixed aperture (44).

14. Apparatus according to any of claims 1 to 12 and wherein displacement of the aperture defining means is provided by movement of a transparent support for images to be scanned.

15. Apparatus according to claim 14 and wherein said movement of said transparent support is linear.

16. Apparatus according to claim 14 and wherein said movement of said transparent support is rotational.

17. Apparatus according to any of claims 1 to 16 and wherein the light sensor (30) is fixed with respect to the aperture (44).

18. Apparatus according to any of claims 1, 2, 8, 9, 10, 11, 13, 14, 15 and 17 and wherein the sensor (30) is a linear multipixel sensor and the sweep direction of the spectrum is generally perpendicular to the longitudinal axis of the sensor.

## Patentansprüche

1. Vorrichtung zum Messen der spektralen Antwort einer Farbbildverarbeitungsvorrichtung, welche Lichtquellenmittel, einen Lichtsensor, eine optische, eine Objektebene definierende Abbildungsvorrichtung, eine Bildebene und eine optische Achse (32) aufweist, wobei die Vorrichtung zum Messen einschließt:
ein zwischen der Objektebene und der Bildebene angeordnetes Beugungsgitter (46);
in der Objektebene angeordnete Mittel (44) zur Definition der Blende; und
Mittel zum Verschieben mindestens der Lichtquellenmittel (22), des Lichtsensors (30) oder der Blende (44) in einer im wesentlichen senkrecht zur optischen Achse (32) verlaufenden Richtung, um an dem Lichtsensor (30) das Lichtspektrum in einem Durchlauf abzutasten.

2. Vorrichtung nach Anspruch 1,
dadurch gekennzeichnet, daß das Beugungsgitter (46) zwischen der optischen Abbildungsvorrichtung und der Objektebene angeordnet ist.

3. Vorrichtung nach einem der Ansprüche 1 oder 2,
dadurch gekennzeichnet, daß die Lichtquellenmittel Punktbeleuchtungsmittel (22) und optische Mittel zur Aufweitung der Punktbeleuchtung aufweisen.

4. Vorrichtung nach Anspruch 3,
dadurch gekennzeichnet, daß die optischen Mittel zur Aufweitung eine zylindrische Linse (40) und einen damit verbundenen Diffuser (42) aufweisen.

5. Vorrichtung nach Anspruch 3,
dadurch gekennzeichnet, daß die optischen Mittel zur Aufweitung einen mit den Punktbeleuchtungsmitteln (22) verbundenen Diffuser (42) aufweisen.

6. Vorrichtung nach Anspruch 3,
dadurch gekennzeichnet, daß die Mittel zur Aufweitung eine integrierende Röhre aufweisen.

7. Vorrichtung nach einem der Ansprüche 1 oder 2,
dadurch gekennzeichnet, daß die Lichtquellenmittel alternativ Punktbeleuchtungsmittel oder Flächenbeleuchtungsmittel, jeweils mit bekannter spektraler Verteilung aufweisen.

8. Vorrichtung nach Anspruch 1,
dadurch gekennzeichnet, daß das Mittel zur Verschiebung in der Lage ist, mindestens zwei der folgenden Mittel zu verschieben: die Lichtquellenmittel (22), das Beugungsgitter (46), den Lichtsensor (30) oder die Blende (44).

9. Vorrichtung nach einem der Ansprüche 1 bis 8,
dadurch gekennzeichnet, daß die Lichtquellenmittel eine lineare Lichtquelle (80) aufweisen.

10. Vorrichtung nach einem der Ansprüche 1 bis 8,
dadurch gekennzeichnet, daß die Lichtquellenmittel eine Flächenlichtquelle aufweisen.

11. Vorrichtung nach Anspruch 1,
gekennzeichnet durch Mittel zur Korrektur der Abschattung.

12. Vorrichtung nach einem der Ansprüche 1 bis 11,
dadurch gekennzeichnet, daß die Lichtquelle (30) ein Einzelpixelsensor ist.

13. Vorrichtung nach einem der Ansprüche 1 bis 12,
dadurch gekennzeichnet, daß das Mittel zur Definition der Blende ortsfest ist und die relative Verschiebung relativ zu einer ortsfesten Blende (44) ist.

14. Vorrichtung nach einem der Ansprüche 1 bis 12,
dadurch gekennzeichnet, daß die Verschiebung der Mittel zur Definition der Blende durch Verschiebung einer transparenten Aufnahme für die abzutastenden Bilder ausgeführt wird.

15. Vorrichtung nach Anspruch 14,
dadurch gekennzeichnet, daß die Bewegung der transparenten Aufnahme linear ist.

16. Vorrichtung nach Anspruch 14,
dadurch gekennzeichnet, daß die Bewegung der transparenten Aufnahme rotationsförmig ist.

17. Vorrichtung nach einem der Ansprüche 1 bis 16,
dadurch gekennzeichnet, daß der Lichtsensor (30) relativ zur Blende (44) ortsfest ist.

18. Vorrichtung nach einem der Ansprüche 1, 2, 8, 9, 10, 11, 13, 14, 15 und 17,
dadurch gekennzeichnet, daß der Sensor (30) ein linearer Multipixelsensor ist und die Abtastrichtung des Spektrums im wesentlichen senkrecht zur Längsachse des Sensors verläuft.

## Revendications

1. Dispositif pour mesurer la réponse spectrale d'un appareil de formation d'images de couleur, englobant un moyen de source de lumière. un capteur de lumière. un appareil optique de formation d'images définissant un plan d'objet, un plan d'image et un axe optique (32). le dispositif de mesure englobant:
un réseau de diffraction (46) agencé entre le plan d'objet et le plan d'image;
un moyen définissant une ouverture optique (44), agencé dans le plan d'objet; et
un moyen pour déplacer au moins un du moyen de source de lumière (22). du capteur de lumière (30) et de l'ouverture optique (44) dans une direction généralement perpendiculaire à l'axe optique (32). pour assurer un balayage du spectre de la lumière au niveau dudit capteur de lumière (30).

2. Dispositif selon la revendication 1, dans lequel ledit réseau de diffraction (46) est agencé entre l'appareil optique de formation d'images et le plan d'objet.

3. Dispositif selon les revendications 1 ou 2, dans lequel ledit moyen de source de lumière englobe un moyen d'éclairage ponctuel (22) et un moyen optique d'expansion de l'éclairage ponctuel.

4. Dispositif selon la revendication 3, dans lequel ledit moyen optique d'expansion englobe une lentille cylindrique (40) et un diffuseur (42) qui y est associé.

5. Dispositif selon la revendication 3, dans lequel ledit moyen optique d'expansion englobe un diffuseur (42) associé audit moyen d'éclairage ponctuel (22).

6. Dispositif selon la revendication 3, dans lequel ledit moyen d'expansion comprend un cavité d'intégration.

7. Dispositif selon les revendications 1 ou 2. dans lequel ledit moyen de source de lumière comprend alternativement un moyen d'éclairage ponctuel et un moyen d'éclairage de surface. les deux moyens ayant une distribution spectrale connue.

8. Dispositif selon la revendication 1, dans lequel ledit moyen de déplacement sert à déplacer au moins deux éléments parmi le moyen de source de lumière (22), le réseau de diffraction (46), le capteur de lumière (30) et l'ouverture optique (44).

9. Dispositif selon l'une quelconque des revendications 1 à 8, dans lequel ledit moyen de source de lumière comprend une source de lumière linéaire (80).

10. Dispositif selon l'une quelconque des revendications 1 à 8, dans lequel ledit moyen de source de lumière comprend une source de lumière de surface (80).

11. Dispositif selon la revendication 1, comprenant en outre un moyen de correction du vignettage.

12. Dispositif selon l'une quelconque des revendications 1 à 11, dans lequel ladite source de lumière (30) est un capteur à seul pixel.

13. Dispositif selon l'une quelconque des revendications 1 à 12, dans lequel ledit moyen définissant une ouverture est fixe, ledit déplacement relatif se faisant par rapport à une ouverture fixe (44).

14. Dispositif selon l'une quelconque des revendications 1 à 12, dans lequel le déplacement du moyen définissant l'ouverture est assuré par le déplacement d'un support transparent pour des images devant être balayées.

15. Dispositif selon la revendication 14, dans lequel ledit déplacement dudit support transparent est linéaire.

16. Dispositif selon la revendication 14, dans lequel ledit déplacement dudit support transparent est rotatif.

17. Dispositif selon l'une quelconque des revendications 1 à 16, dans lequel le capteur de lumière (30) est fixe par rapport à l'ouverture (44).

18. Dispositif selon l'une quelconque des revendications 1, 2, 8, 9, 10, 11, 13, 14, 15 et 17, dans lequel le capteur (30) est un capteur linéaire à pixels multiples, la direction du balayage du spectre étant généralement perpendiculaire à l'axe longitudinal du capteur.
